# EUROPÄISCHE PATENTSCHRIFT

(11) **EP 1 631 615 B1**
(45) Veröffentlichungstag und Bekanntmachung des Hinweises auf die Patenterteilung: **21.11.2007**
(21) Anmeldenummer: 04731364.8
(22) Anmeldetag: 06.05.2004
(51) Int. Cl.: C08G 69/02, C08G 69/14

(54) **POLYAMIDE**
POLYAMIDES
POLYAMIDES

(30) Priorität: 14.05.2003 DE 10321789
(43) Veröffentlichungstag der Anmeldung: 08.03.2006
(73) Patentinhaber: BASF Aktiengesellschaft, 67056 Ludwigshafen (DE)
(72) Erfinder: WINTERLING, Helmut, 67061 Ludwigshafen (DE); DEMETER, Jürgen, 67069 Ludwigshafen (DE); DEININGER, Jürgen, 68723 Oftersheim (DE); KORY, Gad, 69251 Gaiberg (DE); SÖTJE, Oliver, 68199 Mannheim (DE); NEUHAUS, Ralf, 69124 Heidelberg (DE); KREMPEL, Kurt, 67127 Rödersheim-Gronau (DE); BENISCH, Christoph, 68165 Mannheim (DE)
(86) Internationale Anmeldenummer: PCT/EP2004/004816
(87) Internationale Veröffentlichungsnummer: WO 2004/101647

(56) Entgegenhaltungen:
- EP-A- 0 602 241
- DATABASE CHEMABS [Online] CHEMICAL ABSTRACTS SERVICE, COLUMBUS, OHIO, US; BUKAC, ZBYNEK: "Polyamides from N-substituted lactams with more than seven atoms in the ring" XP002296926 gefunden im STN Database accession no. 90:187898 & CS 175 888 B (CZECH.) 31. Mai 1977 (1977-05-31)

## Beschreibung

Die vorliegende Erfindung betrifft ein Polyamid, dessen Hauptkette ein N-Alkyl-Caprolactam chemisch gebunden enthält.

Ferner betrifft sie ein Verfahren zur Herstellung eines solchen Polyamids, sowie Fasern, Folien und Formkörper, enthaltend mindestens ein solches Polyamid.

Polyamide, insbesondere Polyamid 6 und Polyamid 6.6, sind technisch bedeutsame Polymere. Zu ihrer Herstellung setzt man üblicherweise geeignete Monomere, wie Caprolactam, Adipinsäure oder Hexamethylendiamin, in Gegenwart von Wasser um.

Nach der Herstellung werden die Polyamide bekanntermaßen zu Formmassen verformt, beispielsweise zu Fasern, Folien oder Formkörpern.

Derartige Formmassen sind in der Anwendung oftmals Kräften ausgesetzt; diese Kräfte können zu einem Zerreißen der Formmasse und damit zu einer Zerstörung der Formmasse führen.

Als Maßstab wird gemäß DIN EN ISO 10350-1 in Verbindung mit DIN EN ISO 527-1 die Bruchdehnung ε₈ bzw. nominelle Dehnung εₜ herangezogen.

Die Bruchdehnung gibt die relative Verlängerung bei der Bruchspannung an, wenn der Bruch vor Erreichen des Streckpunktes erfolgt, die nominelle Dehnung gibt die relative Verlängerung jenseits des Streckpunktes an. Bis zum sogenannten Streckpunkt erfolgt die Verlängerung reversibel, jenseits des Streckpunktes irreversibel.

Anwendungstechnisch ist eine hohe Bruchdehnung erwünscht, da in diesem Fall die Formmasse eine angreifende Kraft elastisch aufnehmen kann und nach Abklingen der Kraft wieder in die ursprüngliche Form zurückkehrt.

Der vorliegenden Erfindung lag die Aufgabe zugrunde, ein Polyamid bereitzustellen, das eine gegenüber Polyamiden gemäß Stand der Technik erhöhte Bruchdehnung gemäß DIN EN ISO 527-1 aufweist, sowie ein Verfahren zur Herstellung eines solchen Polyamids.

Demgemäß wurde das eingangs definierte Polyamid, ein Verfahren zu seiner Herstellung sowie Fasern, Folien und Formkörper, enthaltend mindestens ein solches Polyamid, gefunden.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX ® Faser, US-A-3,287,324) oder Poly-paraphenylen-terephthalamid (KEVLAR ® Faser, US-A-3,671,542).

Die Herstellung von Polyamiden kann prinzipiell nach zwei Verfahren erfolgen.

Bei der Polymerisation von Dicarbonsäuren und Diaminen, wie auch bei der Polymerisation von Aminosäuren oder deren Derivaten, wie Aminocarbonsäurenitrilen, Aminocarbonsäureamiden, Aminocarbonsäureestern oder Aminocarbonsäuresalzen, reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation von A-minocarbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden. Bei der Polymerisation von Aminocarbonsäureestern reagieren die Amino- und Ester-Endgruppen der Ausgangsmonomere oder Ausgangsoligomere miteinander unter Bildung einer Amid-Gruppe und Alkohol. Der Alkohol kann anschließend von der Polymermasse entfernt werden. Bei der Polymerisation von Aminocarbonsäurenitrilen können die Nitrilgruppen zunächst mit Wasser zu Amid- oder Carbonsäuregruppen und die entstandenen Aminocarbonsäureamide oder Aminocarbonsäuren wie beschrieben umgesetzt werden. Diese Polymerisationsreaktion bezeichnet man üblicherweise als Polykondensation.

Die Polymerisation von Lactamen als Ausgangsmonomeren oder Ausgangsoligomeren bezeichnet man üblicherweise als Polyaddition.

Solche Polyamide können nach an sich bekannten Verfahren, wie sie beispielsweise in DE-A-14 95 198, DE-A-25 58 480, EP-A-129 196 oder in: Polymerization Processes, Interscience, New York, 1977, S. 424-467, insbesondere S. 444-446, beschrieben sind, erhalten werden aus Monomeren ausgewählt aus der Gruppe bestehend aus Lactamen, omega-Aminocarbonsäuren, omega-Aminocarbonsäurenitrilen, omega-Aminocarbonsäureamiden, omega-Aminocarbonsäuresalze, omega-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere.

Als Monomere kommen
Monomere oder Oligomere eines C₂- bis C₂₀- vorzugsweise C₂- bis C₁₈- arylaliphatischen oder vorzugsweise aliphatischen Lactams , wie Enantholactam, Undecanolactam, Dodecanolactam oder Caprolactam,
Monomere oder Oligomere von C₂- bis C₂₀-, vorzugsweise C₃- bis C₁₈-Aminocarbonsäuren, wie 6-Aminocapronsäure, 11-Aminoundecansäure, sowie deren Salze, wie Alkalisalze, beispielsweise Lithium-, Natrium-, Kalium-Salze,
Monomere oder Oigomere von C₂- bis C₂₀-, vorzugsweise C₃- bis C₁₈-Aminocarbonsäurenitrilen, wie 6-Aminocapronitril, 11-Aminoundecansäurenitril,
Monomere oder Oligomere von C₂- bis C₂₀-Aminosäureamiden, wie 6-Aminocapronsäureamid, 11-Aminoundecansäureamid,
Ester, vorzugsweise C₁-C₄-Alkylester, wie Methyl-, Ethyl-, n-Propyl-, i-Propyl-, n-Butyl-, i-Butyl-, s-Butyl-ester, von C₂- bis C₂₀-, vorzugsweise C₃- bis C₁₈-Aminocarbonsäuren, wie 6-Aminocapronsäureester, beispielsweise 6-Aminocapronsäuremethylester, 11-Aminoundecansäureester, beispielsweise 11-Aminoundecansäuremethylester,
Monomere oder Oligomere eines C₂- bis C₂₀-, vorzugsweise C₂- bis C₁₂-Alkyldiamins, wie Tetramethylendiamin oder vorzugsweise Hexamethylendiamin,
   mit einer C₂- bis C₂₀-, vorzugsweise C₂- bis C₁₄- aliphatischen Dicarbonsäure oder deren Mono- oder Dinitrile, wie Sebacinsäure, Dodecandisäure, Adipinsäure, Sebacinsäuredinitril, Decan-1,10-dinitril oder Adipodinitril,
Monomere oder Oligomere eines C₂- bis C₂₀-, vorzugsweise C₂- bis C₁₂-Alkyldiamins, wie Tetramethylendiamin oder vorzugsweise Hexamethylendiamin,
   mit einer C₈- bis C₂₀-, vorzugsweise C₈- bis C₁₂- aromatischen Dicarbonsäure oder deren Derivate , beispielsweise Chloride, wie 2,6-Naphthalindicarbonsäure, vorzugsweise Isophthalsäure oder Terephthalsäure,
Monomere oder Oligomere eines C₂- bis C₂₀-, vorzugsweise C₂- bis C₁₂-Alkyldiamins, wie Tetramethylendiamin oder vorzugsweise Hexamethylendiamin,
   mit einer C₉- bis C₂₀-, vorzugsweise C₉- bis C₁₈- arylaliphatischen Dicarbonsäure oder deren Derivate, beispielsweise Chloride, wie o-, m- oder p-Phenylendiessigsäure,
Monomere oder Oligomere eines C₆- bis C₂₀-, vorzugsweise C₆- bis C₁₀- aromatischen Diamins, wie m- oder p-Phenylendiamin,
   mit einer C₂- bis C₂₀-, vorzugsweise C₂- bis C₁₄- aliphatischen Dicarbonsäure oder deren Mono- oder Dinitrile, wie Sebacinsäure, Dodecandisäure, Adipinsäure, Sebacinsäuredinitril, Decan-1,10-dinitril oder Adipodinitril,
Monomere oder Oligomere eines C₆- bis C₂₀- vorzugsweise C₆- bis C₁₀- aromatischen Diamins, wie m- oder p-Phenylendiamin,
   mit einer C₈- bis C₂₀-, vorzugsweise C₈- bis C₁₂- aromatischen Dicarbonsäure oder deren Derivate, beispielsweise Chloride, wie 2,6-Naphthalindicarbonsäure, vorzugsweise Isophthalsäure oder Terephthalsäure,
Monomere oder Oligomere eines C₆- bis C₂₀- vorzugsweise C₆- bis C₁₀- aromatischen Diamins, wie m- oder p-Phenylendiamin,
   mit einer C₉- bis C₂₀-, vorzugsweise C₉- bis C₁₈- arylaliphatischen Dicarbonsäure oder deren Derivate, beispielsweise Chloride, wie o-, m- oder p-Phenylendiessigsäure,
Monomere oder Oligomere eines C₇- bis C₂₀-, vorzugsweise C₈- bis C₁₈- arylaliphatischen Diamins, wie m- oder p-Xylylendiamin,
   mit einer C₂- bis C₂₀-, vorzugsweise C₂- bis C₁₄- aliphatischen Dicarbonsäure oder deren Mono- oder Dinitrile, wie Sebacinsäure, Dodecandisäure, Adipinsäure, Sebacinsäuredinitril, Decan-1,10-dinitril oder Adipodinitril,
Monomere oder Oligomere eines C₇- bis C₂₀-, vorzugsweise C₈- bis C₁₈- arylaliphatischen Diamins, wie m- oder p-Xylylendiamin,
   mit einer C₆- bis C₂₀-, vorzugsweise C₆- bis C₁₀- aromatischen Dicarbonsäure oder deren Derivate , beispielsweise Chloride, wie 2,6-Naphthalindicarbonsäure, vorzugsweise Isophthalsäure oder Terephthalsäure,
Monomere oder Oligomere eines C₇- bis C₂₀-, vorzugsweise C₈- bis C₁₈- arylaliphatischen Diamins, wie m- oder p-Xylylendiamin,
   mit einer C₉- bis C₂₀-, vorzugsweise C₉- bis C₁₈- arylaliphatischen Dicarbonsäure oder deren Derivate, beispielsweise Chloride, wie o-, m- oder p-Phenylendiessigsäure,
sowie Homopolymere, Copolymere, Mischungen und Pfropfungen solcher Ausgangsmonomere oder Ausgangsoligomere in Betracht.

Als Oligomere können insbesondere die Dimeren, Trimeren, Tetrameren, Pentamere oder Hexameren der genannten Monomere oder von Gemischen solcher Monomere eingesetzt werden.

In einer bevorzugten Ausführungsform setzt man als Lactam Caprolactam, als Diamin Tetramethylendiamin, Hexamethylendiamin oder deren Gemische und als Dicarbonsäure Adipinsäure, Sebacinsäure, Dodecandisäure, Terephthalsäure, Isophthalsäure oder deren Gemische ein. Besonders bevorzugt ist als Lactam Caprolactam, als Diamin Hexamethylendiamin und als Dicarbonsäure Adipinsäure oder Terephthalsäure oder deren Gemische.

Besonders bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 6,12, Nylon 7, Nylon 11, Nylon 12 oder den Aramiden Poly-metaphenylen-isophthalamid oder Poly-paraphenylen-terephthalamid, insbesondere zu Nylon 6 oder Nylon 66, führen.

In einer bevorzugten Ausführungsform kann man bei der Herstellung der Polyamide einen oder mehrere Kettenregler einsetzen. Als Kettenregler kommen vorteilhaft Verbindungen in Betracht, die eine oder mehrere, wie zwei, drei oder vier, im Falle von Systemen in Form von Fasern bevorzugt zwei, bei der Polyamidbildung reaktive Amino-Gruppen oder eine oder mehrere, wie zwei, drei oder vier, im Falle von Systemen in Form von Fasern bevorzugt zwei, bei der Polyamidbildung reaktive Carboxyl-Gruppen aufweisen.

Im ersten Fall erhält man Polyamide, bei denen die zur Herstellung des Polyamids eingesetzten Monomere und Kettenregler eine höhere Zahl an zur Bildung der Polymerkette eingesetzten Amino-Gruppen oder deren Äquivalente als zur Bildung der Polymerkette eingesetzte Carbonsäure-Gruppen oder deren Äquivalente aufweisen.

Im zweiten Fall erhält man Polyamide, bei denen die zur Herstellung des Polyamids eingesetzten Monomere und Kettenregler eine höhere Zahl an zur Bildung der Polymerkette eingesetzten Carbonsäure-Gruppen oder deren Äquivalente als zur Bildung der Polymerkette eingesetzte Amino-Gruppen oder deren Äquivalente aufweisen.

Als Kettenregler können vorteilhaft Monocarbonsäuren, wie Alkancarbonsäuren, beispielsweise Essigsäure, Propionsäure, wie Benzol- oder Naphthalinmonocarbonsäure, beispielsweise Benzoesäure, Dicarbonsäuren, wie C₄-C₁₀-Alkandicarbonsäure, beispielsweise Adipinsäure, Azelainsäure, Sebacinsäure, Dodecandisäure, C₅-C₈-Cycloalkandicarbonsäuren, beispielsweise Cyclohexan-1,4-dicarbonsäure, Benzol- oder Naphthalindicarbonsäure, beispielsweise Terephthalsäure, Isophthalsäure, Naphthalin-2,6-dicarbonsäure, C₂- bis C₂₀-, vorzugsweise C₂- bis C₁₂-Alkylamine, wie Cyclohexylamin, C₆- bis C₂₀-, vorzugsweise C₆- bis C₁₀- aromatische Monoamine, wie Anilin, oder C₇- bis C₂₀-, vorzugsweise C₈- bis C₁₈- arylaliphatische Monoamine, wie Benzylamin, Diamine, wie C₄-C₁₀-Alkandiamine, beispielsweise Hexamethylendiamin eingesetzt werden.

Die Kettenregler können unsubstituiert oder substituiert sein, beispielsweise durch aliphatische Gruppen, vorzugsweise C₁-C₈-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, C₁-C₈-Alkoxy, COOH, C₂-C₆-Carbalkoxy, C₁-C₁₀-Acyloxy, oder C₁-C₈-Alkylamino, Sulfonsäure oder deren Salze, wie Alkali- oder Erdalkalisalze, Cyano, oder Halogene, wie Fluor, Chlor, Brom. Beispiele für substituierte Kettenregler sind Sulfoisophthalsäure, deren Alkali- oder Erdalkalisalze, wie Lithium-, Natrium oder Kalium-Salze, Sulfoisophthalsäureester, beispielsweise mit C₁-C₁₆-Alkanolen, oder Sulfoisophthalsäuremono- oder diamide, insbesondere mit zur Bildung von Polyamiden geeigneten, mindestens eine Aminogruppe tragenden Monomeren, wie Hexamethylendiamin oder 6-Aminocapronsäure.

Bevorzugt kommen als Kettenregler sterisch gehinderte Piperidin-Derivate der Formel 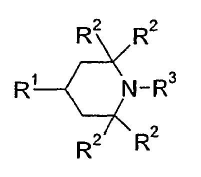 wobei
- R¹: für eine funktionelle Gruppe steht, die zur Amidbildung gegenüber der Polymerkette des Polyamids fähig ist,
vorzugsweise eine Gruppe -(NH)R⁵, wobei R⁵ für Wasserstoff oder C₁-C₈-Alkyl steht, oder eine Carboxylgruppe oder ein Carboxylderivat oder eine Gruppe-(CH₂)ₓ(NH)R⁵, wobei X für 1 bis 6 steht und R⁵ für Wasserstoff oder C₁-C₈-Alkyl steht, oder eine Gruppe -(CH₂)_{y}COOH, wobei Y für 1 bis 6 steht, oder ein-(CH₂)_{y}COOH Säurederivat, wobei Y für 1 bis 6 steht,
insbesondere für eine Gruppe -NH₂ steht,
- R²: für eine Alkylgruppe steht, vorzugsweise eine C₁-C₄-Alkylgruppe, wie Methyl, Ethyl, n-Propyl, i-Propyl, n-Butyl, i-Butyl, s-Butyl, s-Butyl,
insbesondere eine Methylgruppe,
- R³: für Wasserstoff, C₁-C₄-Alkyl oder O-R⁴ steht, wobei R⁴ für Wasserstoff oder C₁-C₇-Alkyl steht,
insbesondere R³ für Wasserstoff steht,
in Betracht.

In solchen Verbindungen reagieren üblicherweise die tertiären, insbesondere sekundären Aminogruppen der Piperidin-Ringsysteme dabei wegen sterischer Hinderung nicht.

Besonders bevorzugt als sterisch gehindertes Piperidin-Derivat ist 4-Amino-2,2,6,6-Tetramethylpiperidin.

Vorteilhaft kann man einen Kettenregler in Mengen von mindestens 0,001 Mol-%, vorzugsweise mindestens 0,01 Mol-%, insbesondere mindestens 0,03 Mol-%, besonders bevorzugt mindestens 0,08 Mol-%, bezogen auf 1 Mol Säureamidgruppen des Polyamids, einsetzen.

Vorteilhaft kann man einen Kettenregler in Mengen von höchstens 2,0 Mol-%, vorzugsweise höchstens 1 Mol-%, insbesondere höchstens 0,6 Mol-%, besonders bevorzugt höchstens 0,5 Mol-%, bezogen auf 1 Mol Säureamidgruppen des Polyamids, einsetzen.

Erfindungsgemäß enthält das Polyamid ein an die Hauptkette des Polyamids chemisch gebundenes N-Alkyl-Lactam.

Im Sinne der vorliegenden Erfindung wird unter dem Begriff N-Alkyl-Lactam ein solches N-Alkyl-Lactam, wie auch ein Gemisch solcher N-Alkyl-Lactame verstanden.

In einer bevorzugten Ausführungsform kommt als N-Alkyl-Lactam ein N-C₁-C₁₀-Alkyl-Lactam in Betracht, vorzugsweise ein N-Alkyl-Lactam ausgewählt aus der Gruppe bestehend aus N-Methyl-, N-Ethyl-, N-n-Propyl-, N-i-Propyl-, N-n-Butyl-, N-i-Butyl-, N-t-Butyl-Lactam, insbesondere ein N-Ethyl-Lactam.

Weiterhin kommen als N-Alky-Lactame solche in Betracht, die 3 bis 10 Kohlenstoffatome im Lactamring aufweisen, vorzugsweise solche, in denen der Lactamring ausgewählt ist aus der Gruppe bestehend aus Pyrrolidon, Piperidon, Caprolactam, insbesondere Caprolactam.

Der Lactamring kann substituiert sein, beispielsweise durch eine oder mehrere Alkylgruppen, vorzugsweise C₁-C₁₀-Alkyl-Gruppen, insbesondere Methyl, Ethyl, n-Propyl, i-Propyl, n-Butyl, i-Butyl, t-Butyl, Halogen, wie Fluor, Chlor, Brom, Halogenalkyl, wie Trifluormethyl. In einer bevorzugten Ausführungsform ist der Lactamring unsubstituiert.

In einer besonders bevorzugten Ausführungsform kommt als N-Alkyl-Lactam N-Etyl-Caprolactam in Betracht.

Solche N-Alkyl-Lactame und deren Herstellung sind an sich bekannt.

Vorteilhaft kann der Gehalt an N-Alkyl-Lactam mindestens 0,001 Mol-%, vorzugsweise mindestens 0,01 Mol-%, insbesondere mindestens 0,03 Mol-%, besonders bevorzugt mindestens 0,08 Mol-%, bezogen auf 1 Mol Säureamidgruppen des Polyamids, betragen.

Vorteilhaft kann der Gehalt an N-Alkyl-Lactam höchstens 2,0 Mol-%, vorzugsweise höchstens 1 Mol-%, insbesondere höchstens 0,6 Mol-%, besonders bevorzugt höchstens 0,5 Mol-%, bezogen auf 1 Mol Säureamidgruppen des Polyamids, betragen.

Die erfindungsgemäßen Polyamide sind erhältlich, indem man die Umsetzung von zur Bildung eines Polyamids geeigneten Monomeren, Oligomeren oder deren Gemische zu einem Polyamid in Gegenwart eines N-Alkyl-Lactams oder einer Verbindung, aus der ein N-Alkyl-Lactam unter den Reaktionsbedingungen zur Herstellung des Polyamids freigesetzt wird, durchführt.

Zur Herstellung der erfindungsgemäßen Polyamide können die für die Herstellung von Polyamiden aus den entsprechenden Monomeren üblichen Verfahrensbedingungen angewendet werden, wie sie beispielsweise in DE-A-14 95 198, DE-A-25 58 480, EP-A-129 196, DE-A-19 709 390, DE-A-35 34 817, WO 99/38908, WO 99/43734, WO 99/43732, WO 00/24808, WO 01/56984 oder in Polymerization Processes, Interscience, New York, 1977, S. 424-467, insbesondere S. 444-446, beschrieben sind.

In einer bevorzugten Ausgestaltung kann man die Polymerisation bzw. Polykondensation nach dem erfindungsgemäßen Verfahren in Gegenwart mindestens eines Pigments durchführen. Bevorzugte Pigmente sind Titandioxid, vorzugsweise in der Anatas- oder der Rutil-Kristallform, oder farbgebende Verbindungen anorganischer oder organischer Natur. Die Pigmente werden vorzugsweise in einer Menge von 0 bis 5 Gewichtsteile, insbesondere 0,02 bis 2 Gewichtsteile, jeweils bezogen auf 100 Gewichtsteile Polyamid, zugegeben. Die Pigmente können dem Reaktor mit den Ausgangsstoffen oder getrennt davon zugeführt werden.

Weiterhin kann zur Herstellung der Polyamide neben den beiden genannten, bevorzugten Verfahren die anionische Polymerisation herangezogen werden.

Bei der anionischen Polymerisation werden üblicherweise
a) ein Lactam oder eine Mischung von Lactamen,
b) ein Lactamat oder eine Verbindung, die aus einem Lactam gemäß a) ein Lactamat freisetzt, oder Mischungen solcher Komponenten und
c) ein die Polymerisation regulierender Aktivator,
miteinander umgesetzt unter Erhalt eines Polyamids.

Verfahren zur anionischen Polymerisation von Lactamen, die auch als alkalische Polymerisation von Lactamen bezeichnet wird, sowie geeignete Verbindungen a), b) und c) sind allgemein bekannt, beispielsweise aus US-A-3,206,418, US-A-3,207,713, US-A-3,494,999, US-A-3,793,255, US-A-4,233,433, US-A-4,393,193, US-A-4,503,014, US-A-5,747,634, WO-A-00/58387, WO-A-01/49906, International Polymer Processing 16(2) (2001) 172-182 oder Fourné, Synthetische Fasern, Carl Hanser Verlag, München/Wien, 1995, Seite 38-39.

Die erfindungsgemäßen Polyamide können vorteilhaft zur Herstellung von Fasern, Folien und Formkörper , die ein solches Polyamid enthalten, insbesondere aus einem solchen Polyamid bestehen, eingesetzt werden.

### Beispiele

In den Beispielen wurde die Lösungsviskosität als relative Lösungsviskosität in 96%-Schwefelsäure gemessen gemäß DIN 51562-1 bis -4.

Hierbei wurde 1 g Polymer auf 100 ml Lösung eingewogen und die Durchlaufzeit in einem Ubbelohde-Viskosimeter gegen das reine Lösungsmittel gemessen.

### Beispiel 1

In einem Druckkessel wurden 500 kg (4419 mol) Caprolactam, 50 kg vollentsalztes Wasser und 1271 g (9 mol) N-Ethylcaprolactam unter Stickstoffatmosphäre auf eine Innentemperatur von 270°C aufgeheizt, direkt im Anschluss innerhalb einer Stunde auf Normaldruck entspannt und 60 Minuten nachkondensiert und ausgefahren.

Das ausgefahrene Polyamid wurde extrahiert, getrocknet und in der festen Phase auf eine relative Lösungsviskosität von RV=2,72 getempert.

### Vergleichsbeispiel 1

Es wurde wie in Beispiel 1 verfahren mit der Ausnahme, dass kein N-Ethylcaprolactam zugesetzt wurde. Nach Temperung betrug die relative Lösungsviskosität RV = 2,73.

### Beispiel 2

In die gemäß Beispiel 1 und Vergleichsbeispiel 1 hergestellten Polymere wurden über einen Extruder 30 Gew.-% Glasfasern OCF 123 D 10 P (Firma OCF) und 7 Gew.-% Kautschuk Lupolen KR 1270 (Firma BASF Aktiengesellschaft) eincompoundiert (die Prozentangaben beziehen sich auf den fertigen Compound). Nach Compoundierung betrug die relative Lösungsviskosität jeweils 2,80.

Von beiden Compounds wurde gemäß Prüfvorschrift ISO 527 die Bruchdehnung bestimmt. Folgendes Ergebnis wurde erhalten:
Normierte Bruchdehnung (Polymer aus Beispiel 1): 6 %
Normierte Bruchdehnung (Polymer aus Vergleichsbeispiel 1): 4 %

Somit weist das gemäß Beispiel 1 hergestellte Polymer im Vergleich zu Vergleichsbeispiel 1 hergestellte Polymer eine um 50 % erhöhte Bruchdehnung auf.

## Patentansprüche

1. Polyamid, dessen Hauptkette ein N-Alkyl-Caprolactam chemisch gebunden enthält.

2. Polyamid nach Anspruch 1, wobei das N-Alkyl-Caprolactam ein N-C₁-C₁₀-Alkyl-Caprolactam ist.

3. Polyamid nach Anspruch 1, wobei das N-Alkyl-Caprolactam ausgewählt ist aus der Gruppe bestehend aus N-Methyl-, N-Ethyl-, N-n-Propyl-, N-i-Propyl-, N-n-Butyl-, N-i-Butyl-, N-t-Butyl-Caprolactam.

4. Polyamid nach Anspruch 1, wobei das N-Alkyl-Caprolactam N-Ethyl-Caprolactam ist.

5. Polyamid nach den Ansprüchen 1 bis 4, wobei der Gehalt an N-Alkyl-Caprolactam im Bereich von 0,001 Mol-% bis 2 Mol-%, bezogen auf 1 Mol Säureamidgruppen des Polyamids, liegt.

6. Verfahren zur Herstellung eines Polyamids, **dadurch gekennzeichnet, daß** man die Umsetzung von zur Bildung eines Polyamids geeigneten Monomeren zu einem Polyamid in Gegenwart eines N-Alkyl-Caprolactams gemäß den Ansprüchen 1 bis 5 durchführt.

7. Verfahren zur Herstellung eines Polyamids, **dadurch gekennzeichnet, daß** man die Umsetzung von zur Bildung eines Polyamids geeigneten Oligomeren zu einem Polyamid in Gegenwart eines N-Alkyl-Caprolactams gemäß den Ansprüchen 1 bis 5 durchführt.

8. Fasern, Folien und Formkörper, enthaltend ein Polyamid gemäß den Ansprüchen 1 bis 5.

## Claims

1. A polyamide whose main chain comprises a chemically bound N-alkylcaprolactam.

2. The polyamide according to claim 1 wherein the N-alkylcaprolactam is an N-C₁-C₁₀-alkylcaprolactam.

3. The polyamide according to claim 1 wherein the N-alkylcaprolactam is selected from the group consisting of N-methylcaprolactam, N-ethylcaprolactam, N-n-propylcaprolactam, N-i-propylcaprolactam, N-n-butylcaprolactam, N-i-butylcaprolactam and N-t-butylcaprolactam.

4. The polyamide according to claim 1 wherein the N-alkylcaprolactam is N-ethylcaprolactam.

5. The polyamide according to any of claims 1 to 4 wherein the N-alkylcaprolactam content is in the range from 0.001 mol% to 2 mol%, based on 1 mol of acid amide groups of the polyamide.

6. A process for preparing a polyamide, which comprises converting monomers suitable for forming a polyamide into a polyamide in the presence of an N-alkylcaprolactam according to any of claims 1 to 5.

7. A process for preparing a polyamide, which comprises converting oligomers suitable for forming a polyamide into a polyamide in the presence of an N-alkylcaprolactam according to any of claims 1 to 5.

8. Fibers, films and moldings comprising a polyamide according to any of claims 1 to 5.

## Revendications

1. Polyamide, dont la chaîne principale contient un N-alkylcaprolactame lié chimiquement.

2. Polyamide selon la revendication 1, dans lequel le N-alkylcaprolactame est un N-alkyl(C₁-C₁₀)-caprolactame.

3. Polyamide selon la revendication 1, dans lequel le N-alkylcaprolactame est choisi dans le groupe constitué des N-méthyl-, N-éthyl-, N-n-propyl-, Ni-propyl-, N-n-butyl-, N-i-butyl-, N-t-butylcaprolactames.

4. Polyamide selon la revendication 1, dans lequel le N-alkylcaprolactame est un N-éthylcaprolactame.

5. Polyamide selon les revendications 1 à 4, dans lequel la teneur en N-alkylcaprolactame se situe dans une plage de 0,001 % en mole à 2 % en mole, par rapport à 1 mole de groupements amide d'acide du polyamide.

6. Procédé de fabrication d'un polyamide, **caractérisé en ce que** l'on effectue la conversion de monomères convenant à la formation d'un polyamide en un polyamide en présence d'un N-alkylcaprolactame selon les revendications 1 à 5.

7. Procécé de fabrication d'un polyamide, **caractérisé en ce que** l'on effectue la conversion d'oligomères convenant à la formation d'un polyamide en un polyamide en présence d'un N-alkylcaprolactame selon les revendications 1 à 5.

8. Fibres, feuilles et corps moulés, contenant un polyamide selon les revendications 1 à 5.
